# EUROPÄISCHE PATENTANMELDUNG

(11) **EP 2 565 078 A1**
(43) Veröffentlichungstag der Anmeldung: **06.03.2013**
(21) Anmeldenummer: 12005774.0
(22) Anmeldetag: 09.08.2012
(51) Int. Cl.: B60P 7/08

(54) **Aufbauelement für eine Ladefläche eines Fahrzeugs**

(30) Priorität: 05.09.2011 DE 102011112695
(71) Anmelder: KAMEI automotive GmbH, 38448 Wolfsburg (DE)
(72) Erfinder: Schulze, Dirk, 29378 Wittingen (DE)
(74) Vertreter: Friedrich, Andreas

(57) **Zusammenfassung**

Die Erfindung betrifft ein Aufbauelement für eine Ladefläche (8) eines Fahrzeuges, wobei das Aufbauelement über wenigstens ein Befestigungselement (14) verfügt, das einen unteren Vorsprung (16) und einen oberen Vorsprung (18) aufweist, und ein Verschlusselement umfasst, durch das der untere Vorsprung (16) und der obere Vorsprung (18) miteinander verbindbar sind, um eine geschlossene Öse zu bilden.

## Beschreibung

Die Erfindung betrifft ein Aufbauelement für eine Ladefläche eines Fahrzeuges.

Heutzutage sind Ladeflächen unterschiedlichster Transportmittel zumeist mit Zurrösen ausgestattet, um Gegenstände, die sich auf der Ladefläche befinden, gegen ein unerwünschtes Verrutschen und Schieben zu sichern.

Dabei können sowohl Lagerräume von Lastkraftwagen und Transportern sowie Ladeflächen von Pritschenwagen genau so mit Zurrösen ausgestattet sein, wie beispielsweise Ladeflächen von Eisenbahnwaggons oder die Laderäume von Schiffen und Flugzeugen.

Bei einer Zurröse handelt es sich um eine Öse, die fest mit der Ladefläche und damit mit dem jeweiligen Transportmittel verbunden ist. Die Zurröse besteht meist aus Metall. Oftmals ist ein separater Ring, oft in Form eines D-Ringes an der eigentlichen Öse befestigt, der vorzugsweise in einer Vertiefung in der Ladefläche liegt, um eine vollflächige Auflage der zur lagernden Ladung zu gewährleisten.

Natürlich sind auch Fahrzeuge bekannt, deren Ladefläche nicht über eine Zurröse, sondern eine andere Form eines Elementes verfügt, an der Ladung befestigt werden soll. Dies können beispielsweise gespannt Seile oder Gurte oder ähnliche Befestigungsvorrichtungen sein.

Das Festzurren von Gegenständen, die auf der Ladefläche oder in dem Laderaum gesichert werden sollen, geschieht dabei zumeist über Spanngurte oder Seile. Diese weisen oftmals einen Haken auf, mit dem sie in die Zurröse eingreifen. Das jeweils andere Ende wird an der Ladung oder dem Aufbauelement angeordnet und der Gegenstand so vertäut. Um die beim Transport gegebenenfalls wirkenden großen Kräfte aufzunehmen, werden diese Spanngurte und Spannseile schräg von beispielsweise einer oberen Ecke der zu sichernden Ladung oder des zu sichernden Aufbauelementes zu einer Zurröse geführt. Dies bedeutet, dass für jeden zu sichernden Gegenstand deutlich mehr Platz auf der Ladefläche benötigt wird, als der Gegenstand selbst eigentlich einnimmt. Dies bedeutet, dass auf einer Ladefläche nicht die maximale Anzahl an Gütern transportiert werden kann.

Neben auf der Ladefläche zu transportierender Ladung, beispielsweise in Form von Containern oder Paletten, sind jedoch auch Aufbauelemente denkbar, die permanent auf der Ladefläche verbleiben sollen. Dies sind insbesondere Pritschenboxen oder Aufbewahrungsboxen für Werkzeuge oder anderes Ladematerial. Auch Stauräume für Sicherheitseinrichtungen, beispielsweise Helme, Westen oder Verbandszeug, müssen permanent auf der Ladefläche befestigt werden. Auch Werkzeuge und Gerätschaften, wie beispielsweise eine Seilwinde, fallen unter den Begriff des Aufbauelementes gemäß der vorliegenden Erfindung.

Da alle die genannten Gegenstände permanent auf der Ladefläche oder in dem Laderaum vorhanden und gesichert sein müssen, ist hier eine oben beschriebene Anordnung durch Spanngurte und Seile nachteilig. Zum einen geht, wie bereits dargelegt, wertvoller Stauraum verloren, zum anderen sind schräg gespannte Seile Stolperfallen für sich gegebenenfalls auf der Ladefläche bewegende Personen. Zudem kann ein Spanngurt oder ein gespanntes Seil leicht aus Versehen gelöst werden, so dass eine gegebenenfalls nötige jahrelange sichere Befestigung des zu sichernden Aufbauelementes nicht gewährleistet werden kann.

Der Erfindung liegt daher die Aufgabe zugrunde, ein Aufbauelement für eine Ladefläche vorzuschlagen, das einfach, platzsparend, schnell und auch langfristig sicher an der Ladefläche eines Fahrzeuges oder Transportmittels befestigt werden kann.

Die Erfindung löst die gestellte Aufgabe durch ein gattungsgemäßes Aufbauelement für eine Ladefläche eines Fahrzeuges, wobei das Aufbauelement über wenigstens ein Befestigungselement verfügt, das einen unteren Vorsprung und einen oberen Vorsprung aufweist, und ein Verschlusselement umfasst, durch das der untere Vorsprung und der obere Vorsprung miteinander verbindbar sind, um eine geschlossene Öse zu bilden. Mit dieser durch das Verschlusselement zu schließenden Öse kann das Aufbauelement an den meisten zur Befestigung von Ladegütern oder Werkzeugen beziehungsweise Aufbauten von Ladeflächen vorgesehenen Befestigungselementen angeordnet und gesichert werden.

Vorzugsweise ist das Befestigungselement so angeordnet, dass eine an dem Fahrzeug vorgesehene Zurröse zwischen dem unteren Vorsprung und dem oberen Vorsprung einführbar ist, so dass das Aufbauelement durch Verbinden des unteren Vorsprunges mit dem oberen Vorsprung durch das Verschlusselement an der Zurröse befestigbar ist. Das gleiche Prinzip kann auch für an anderen Stellen des Fahrzeugs vorgesehene Anschluss- beziehungsweise Befestigungselemente verwendet werden. Das Befestigungselement des Aufbauelementes ist dabei an die gewünschte Art der Sicherung angepasst anzuordnen, so dass eine möglichst einfache und unkomplizierte Sicherung durch Verbinden des unteren Vorsprunges mit dem oberen Vorsprung durch das Verschlusselement möglich ist. Dadurch wird eine geschlossene Öse gebildet, durch die beispielsweise ein an dem Fahrzeug angeordneter Ring, ein Seil, ein Gurt, eine Zurröse oder ein sonstiges am Fahrzeug befestigtes Befestigungselement geführt wird.

Das Aufbauelement, bei dem es sich beispielsweise um eine Staubox, Pritschenbox oder ein Werkzeug wie eine Seilwinde handelt, soll auf der Ladefläche eines Fahrzeuges beispielsweise an einer Zurröse befestigt werden. Nachfolgend wird die Erfindung für eine Befestigung an Zurrösen beschrieben. Natürlich sind die beschriebenen Ausführungsformen analog auf andee Möghlichkeiten der Befestigung an dem Fahrzeug übertragbar. Dazu wird das Aufbauelement so auf der Ladefläche positioniert, dass das sich vorzugsweise im unteren Bereich des Aufbauelementes befindliche Befestigungselement so angeordnet wird, dass die Zurröse zwischen dem oberen Vorsprung und dem unteren Vorsprung eingebracht werden kann. Dies umschließt auch das Einbringen eines an der eigentlichen Zurröse befestigten Ringes, beispielsweise aus Metall, zwischen dem unteren Vorsprung und dem oberen Vorsprung des Befestigungselementes. Anschließend wird der obere Vorsprung mit dem unteren Vorsprung durch das Verschlusselement verbunden, so dass die Zurröse bzw. der sich daran befindliche Ring, der, wie bereits dargelegt, vorliegend zur Zurröse zählend angesehen wird, zwischen dem oberen Vorsprung und dem unteren Vorsprung eingeschlossen ist. Auf diese Weise ist eine Befestigung des Aufbauelementes, beispielsweise der Staubox oder Pritschenbox, an der Zurröse gewährleistet.

In einer bevorzugten Ausgestaltung der vorliegenden Erfindung umfasst das Aufbauelement mehrere Befestigungselemente, so dass das Aufbauelement an mehreren Zurrösen oder anderen Befestigungselementes, die sich an der Ladefläche des Fahrzeugs befinden, befestigt werden kann. Dabei sind die Aufbauelemente vorteilhafterweise alle identisch ausgebildet. Damit ist eine flexible Verwendbarkeit des Aufbauelementes gewährleistet, da es keine Rolle spielt, an welchen der gegebenenfalls mehreren auf der Ladefläche vorgesehenen Zurrösen oder Befestigungselementen das Aufbauelement befestigt wird.

Besonders vorteilhafterweise umfasst das Verschlusselement eine Schraube, durch die der untere Vorsprung mit dem oberen Vorsprung verbindbar ist. So ist es beispielsweise denkbar, dass im oberen Vorsprung und im unteren Vorsprung jeweils eine Gewindebohrung vorgesehen ist, deren Gewinde auf das Gewinde der Schraube angepasst ist. Durch das Einschrauben der Schraube in die Gewindebohrung zunächst des oberen Vorsprunges und anschließend des unteren Vorsprunges wird eine sichere Verbindung gewährleistet. Zudem kann auf diese Weise der obere Vorsprung und der untere Vorsprung aufeinander zu verbogen werden, so dass das Befestigungselement nicht nur zwischen den beiden Vorsprüngen eingeschlossen sondern derart eingeklemmt ist, dass eine auch nur kleine Verschiebung des Aufbauelementes relativ zur Ladefläche nicht mehr möglich ist. Damit wird eine sichere und dennoch einfache Befestigung gewährleistet, die zudem äußerst platzsparend ist, so dass der ohnehin knappe auf Ladeflächen vorhandene Platz optimal ausgenutzt werden kann.

Vorteilhafterweise umfasst das Befestigungselement ein erstes Bauteil und eines zweites Bauteil, wobei der untere Vorsprung an dem ersten Bauteil und der obere Vorsprung an dem zweiten Bauteil angeordnet ist. Als besonders vorteilhaft hat sich herausgestellt, wenn sowohl das erste Bauteil als auch das zweite Bauteil aus einem Metall bestehen. Damit wird eine besonders hohe Stabilität des Befestigungselementes erreicht. Diese Stabilität wird vorteilhafterweise noch weiter erhöht, wenn beispielsweise zumindest eines der Teile des Befestigungselementes einstückig mit einer Grundplatte des Aufbauelementes ausgebildet ist. So kann es beispielsweise bei einer Seilwinde oder einem Kran aber auch bei einer Lagerbox oder Pritschenbox möglich sein, eine Grundplatte der Vorrichtung mit einem Vorsprung zu versehen, der beispielsweise den unteren Vorsprung des Befestigungselementes bildet. Auf diesen Vorsprung kann ein weiterer Metallstreifen aufgebracht, beispielsweise geschraubt, geschweißt oder genietet, werden, der an seinem dem Gerät abgewandten Ende beispielsweise leicht aufgebogen ist, so dass die Zurröse zwischen dem unteren Vorsprung, der durch den Vorsprung der Grundplatte gebildet wird, und dem oberen Vorsprung, der durch das dem Gerät abgewandte Ende dieses Metallstreifens gebildet wird, einbringbar ist. So werden extrem stabile und haltbare Verbindungen der einzelnen Bauteile gewährleistet, so dass auch die Stabilität der Befestigung des Aufbauelementes auf der Ladefläche bzw. der daran befindlichen Zurröse sehr groß ist. Damit können selbst große, beispielsweise beim Transport des Aufbauelementes auftretende Kräfte kompensiert werden. Das so befestigte Aufbauelement kann sich daher auch bei extremen Manövern des jeweiligen Transportmittels, beispielsweise einem Kurvenflug eines Flugzeuges oder Bremsmanövern von Lkw, Transportern oder Pritschenfahrzeugen, nicht bewegen.

Dadurch, dass keine gespannten Seile oder Spanngurte verwendet werden, ist die Stolpergefahr für sich auf der Ladefläche bewegende Personen deutlich reduziert. Dadurch wird auch die Arbeitssicherheit erhöht und die Unfallgefahr reduziert.

Um die Stabilität der Befestigung des Aufbauelementes weiter zu steigern, kann vorteilhafterweise ein Hakenelement vorgesehen sein, das ausgebildet ist, in einer an dem Fahrzeug vorhandenen Nut eingebracht zu werden. Dies ist beispielsweise bei der Befestigung einer Pritschenbox auf einem Pritschenfahrzeug denkbar. Um die Ladefläche eines Pritschenfahrzeuges verläuft umlaufend ein Rand, der derart umgebogen ist, dass sich eine umlaufende nach unten offene Nut ergibt. In diese kann das vorgesehene Hakenelement eingreifen, und so eine Bewegung senkrecht zu dieser Nut verhindern. Dadurch wird eine weitere Stabilisierung der Befestigung erreicht. Dies ist selbstverständlich nicht nur bei Pritschenfahrzeugen denkbar, sondern bei jeder Art von Transportmittel, die über geeignete Befestigungselemente bzw. Nuten oder Vorsprünge verfügt.

Das wenigstens eine Hakenelement ist bevorzugterweise in wenigstens eine Richtung verschieblich, so dass es in die Nut einschiebbar ist. So kann es beispielsweise über eine Schraubverbindung mit einem Langloch so an einem Körper des Aufbauelementes befestigt sein, dass es durch Lösen der Schraubverbindung entlang dem Langloch verschieblich ist. Somit kann das Aufbauelement zunächst korrekt auf der Ladefläche positioniert werden, bevor das wenigstens eine Hakenelement derart verschoben wird, dass es in die dafür vorgesehene Nut eingreift. Anschließend kann die Schraubverbindung angezogen werden, so dass eine sichere Befestigung gewährleistet ist. Ein Entfernen des Aufbauelementes ohne das Lösen der Schraubverbindung ist in diesem Fall nicht mehr möglich.

Gerade auf Pritschenfahrzeugen und Transportern sowie Lkw, die oftmals unbeaufsichtigt an Lager- oder Betriebstoren oder auf Baustellen abgestellt werden, ist die Diebstahlgefahr von Werkzeugen und anderen Materialien relativ groß. Daher sind Stauboxen und andere Elemente, die zur Aufnahme derartiger Materialien dienen, oftmals abschließbar. Sofern beispielsweise jedoch eine abschließbare Pritschenbox nur über einen Spanngurt oder ähnliches auf der Pritsche eines Pritschenfahrzeuges angeordnet ist oder vielleicht sogar ohne Befestigung auf der Pritsche steht, kann beispielsweise mit einem Gabelstapler die gesamte Pritschenbox entwendet werden. Um dies zu verhindern, kann das Verschlusselement beispielsweise in Form eines Vorhängeschlosses ausgebildet sein, so dass das Aufbauelement an der Zurröse der Ladefläche angeschlossen und somit Diebstahlsicher verwahrt wird. Dies kann natürlich auch zusätzlich zu einem weiteren Verschlusselement, beispielsweise in Form einer Schraube oder ähnlichem vorgesehen sein. Bei einem Aufbauelement handelt es sich vorteilhafterweise um eine Staubox oder eine Pritschenbox.

Mit Hilfe einer Zeichnung wird nachfolgend ein Ausführungsbeispiel der vorliegenden Erfindung näher erläutert. Es zeigt
- Figur 1 -: einen Ausschnitt eines an einer Zurröse befestigten Aufbauelementes gemäß einem ersten Ausführungsbeispiel der vorliegenden Erfindung,
- Figur 2 -: die Situation aus Figur 1 in einer Teilschnittdarstellung,
- Figur 3 -: die Darstellung aus Figur 2 in einer Seitenansicht,
- Figur 4 -: die schematische Darstellung eines Aufbauelementes gemäß einem weiteren Ausführungsbeispiel der vorliegenden Erfindung in einer Teilschnittdarstellung,
- Figur 5 -: einen vergrößerten Ausschnitt aus Figur 4 und
- Figur 6 -: eine schematische Ansicht eines Aufbauelementes gemäß einem Ausführungsbeispiel der vorliegenden Erfindung in einer Teilschnittdarstellung.

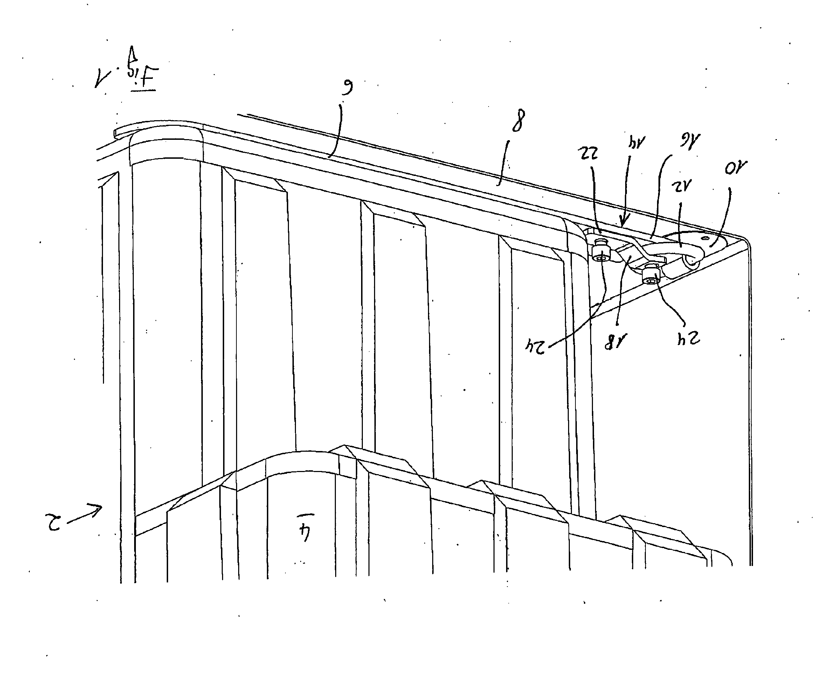

Figur 1 zeigt einen Ausschnitt eines Aufbauelementes gemäß einem Ausführungsbeispiel der vorliegenden Erfindung. Dieses Aufbauelement ist im gezeigten Ausführungsbeispiel eine Pritschenbox 2. Natürlich ist auch jedes andere Aufbauelement denkbar. Man erkennt im oberen Bereich der Figur 1, dass die Pritschenbox 2 über einen Überhang 4 verfügt. Dieser ist vorgesehen, damit die Pritschenbox 2 im gezeigten Ausführungsbeispiel auf einer Pritsche bzw. einer Ladefläche eines Fahrzeugs angeordnet werden kann, das in diesem Bereich über Radkästen verfügt.

Man erkennt, dass die Pritschenbox 2 über eine Grundplatte 6 verfügt, mit der sie auf einer Ladefläche 8 des Fahrzeugs aufliegt. An der Ladefläche 8 befindet sich eine Zurröse 10, die im gezeigten Ausführungsbeispiel einen D-Ring 12 umfasst. An diesem D-Ring 12 befindet sich das Befestigungselement 14, das einen unteren Vorsprung 16 und einen oberen Vorsprung 18 umfasst. Man erkennt zudem, dass der untere Vorsprung 16 im gezeigten Ausführungsbeispiel einstückig mit der Grundplatte 6 der Pritschenbox 2 ausgebildet ist. Dies ist natürlich nicht notwendigerweise der Fall. Alternativ dazu kann der untere Vorsprung auch durch ein nicht gezeigtes erstes Bauteil 20 gebildet sein, das an dem Aufbauelement angeordnet ist.

Am unteren Vorsprung 16 befindet sich ein zweites Bauteil 22, das im in Figur 1 gezeigten Ausführungsbeispiel über zwei Schrauben 24 mit dem unteren Vorsprung 16 verbindbar ist.

In Figur 1 befindet sich der D-Ring 12 zwischen dem unteren Vorsprung 16 und dem oberen Vorsprung 18, die durch die beiden Schrauben 24 so miteinander verbunden sind, dass der D-Ring 12 nicht aus dem Befestigungselement 14 entfernt werden kann, ohne eine der beiden Schrauben 24 zu lösen. Insbesondere durch starkes Anziehen der in Figur 1 linken Schraube 24 ist es möglich, den oberen Vorsprung 18 des zweiten Bauteils 22 auf den unteren Vorsprung zuzubiegen und so den D-Ring 12 der Zurröse 10 einzuklemmen. Damit wird eine sichere Befestigung des Aufbauelementes gewährleistet.

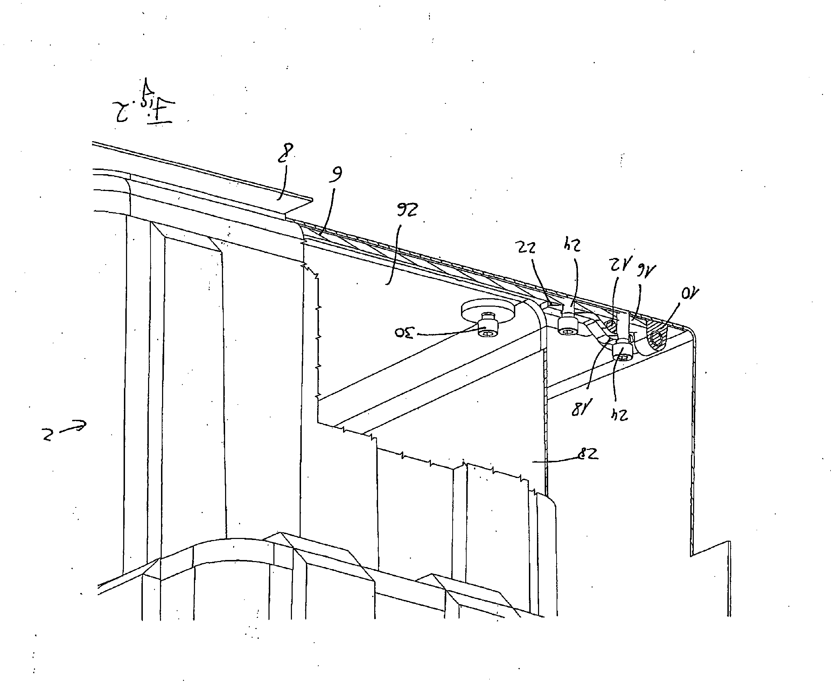

Figur 2 zeigt die Situation aus Figur 1 in einer Teilschnittdarstellung. Auch hier ist der untere Vorsprung 16 einstückig mit der Grundplatte 6 der Pritschenbox 2, die das Aufbauelement darstellt, ausgebildet. Mit dieser Grundplatte 6 liegt die Pritschenbox 2 auf der Ladefläche 8 eines Fahrzeugs auf. Die Grundplatte 6 ist an einer Unterseite 26 eines Boxkörpers 28 mittels einer weiteren Schraube 30 befestigt. Hier ist natürlich auch jede andere Befestigungsart, beispielsweise kleben, schweißen oder nieten, denkbar.

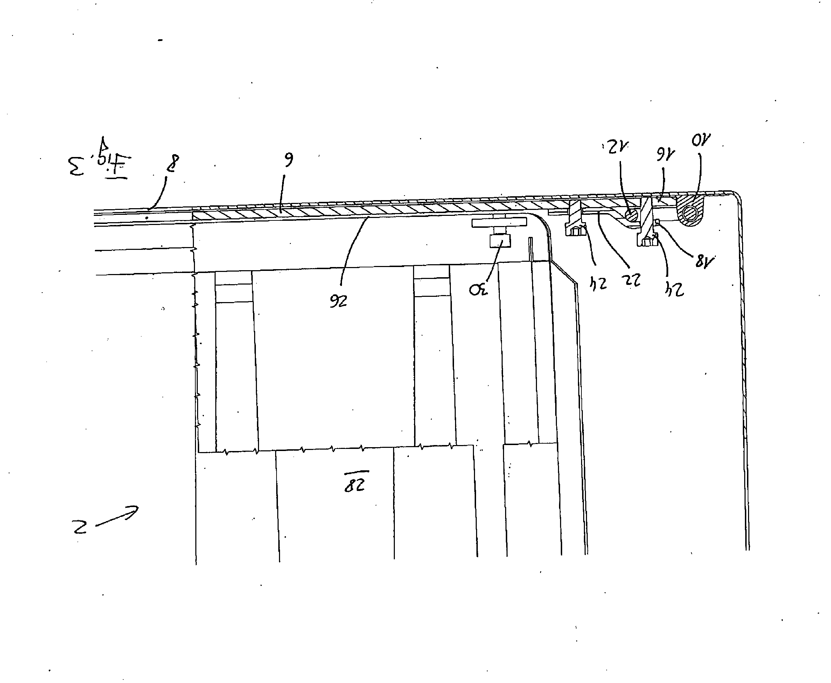

Figur 3 zeigt die gleiche Situation wie Figur 2 in einer Seitenansicht. In dieser Darstellung ist besonders gut zu erkennen, dass die Schrauben 24, mit denen der untere Vorsprung 16 und der obere Vorsprung 18 verbunden sind, nicht durch die Grundplatte 6 der Pritschenbox 2 hindurchragen. Damit ist weiterhin ein vollflächiges Aufliegen der Grundplatte 6 auf der Ladefläche 8 des Fahrzeuges gewährleistet. Gleichzeitig ist zu erkennen, dass der obere Vorsprung 18 in Richtung auf den unteren Vorsprung 16 verbogen ist, so dass der D-Ring 12 zwischen dem oberen Vorsprung 18 und dem unteren Vorsprung 16 eingeklemmt ist.

In den Figuren 1 bis 3 liegt der D-Ring 12 im Wesentlichen horizontal auf dem unteren Vorsprung 16, der in den gezeigten Figuren einstückig mit der Grundplatte 6 ausgebildet ist, auf. Dies ist nicht zwingend notwendig. So ist es auch denkbar, den unteren Vorsprung 16 und den oberen Vorsprung 18 etwas höher als in den Figuren gezeigt, anzuordnen, so dass der D-Ring 12 mehr oder weniger aufrecht steht. In diesem Fall ist es möglich, anstelle der in Figur 3 linken Schraube 24, die das Verschlusselement in diesem Ausführungsbeispiel bildet, beispielsweise ein Vorhängeschloss vorzusehen, durch das der obere Vorsprung 18 und der untere Vorsprung 16 miteinander verbunden sind. Auf diese Weise wird verhindert, dass Unbefugte das Verschlusselement und damit die Befestigung des Aufbauelementes an der Ladefläche 8 bzw. der daran befestigten Zurröse 10 lösen und das Aufbauelement entwenden können.

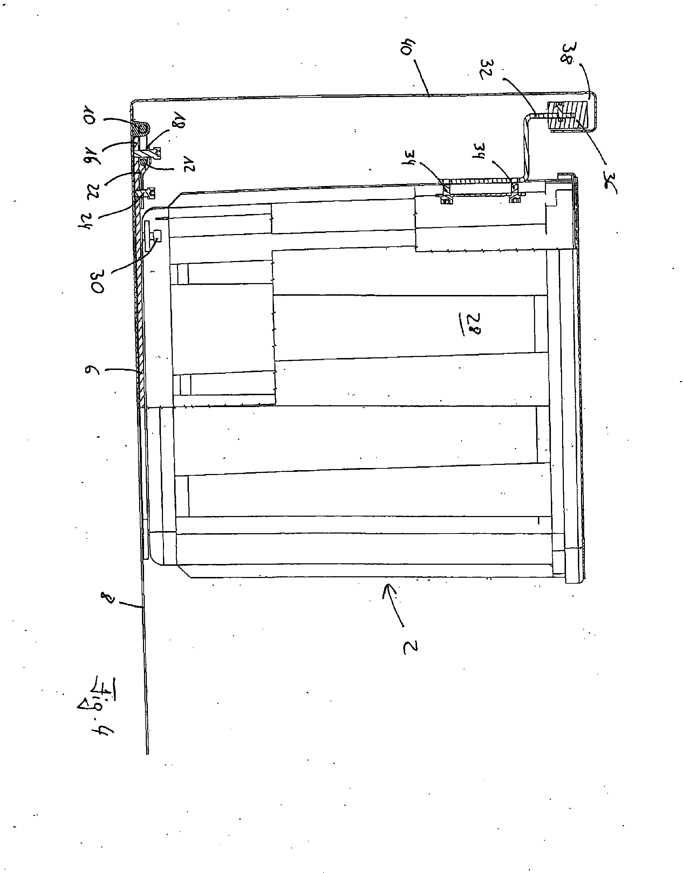

Figur 4 zeigt eine Seitenansicht eines Aufbauelementes gemäß einem Ausführungsbeispiel der vorliegenden Erfindung in einer Teilschnittdarstellung. Der untere linke Teil der Figur 4 entspricht der in Figur 3 gezeigten Darstellung. Auf eine nähere Erläuterung wird daher hier verzichtet.

Man erkennt, dass am Boxkörper 28 ein Hakenelement 32 angeordnet ist. Dies geschieht im in Figur 4 gezeigten Ausführungsbeispiel über zwei weitere Schrauben 34, mit denen das Hakenelement 32 am Boxkörper 28 befestigt ist. Am der Pritschenbox 2 abgewandten Ende des Hakenelementes 32 befindet sich ein Füllkörper 36, der in einer Nut 38 angeordnet ist, die in einem oberen Rand einer Seitenwand 40 vorgesehen ist. Dadurch, dass der Füllkörper 36 und damit auch der das sich in ihm befindliche Ende des Hakenelementes 32 in die Nut 38 eingeführt ist, ist eine Verschiebung der Pritschenbox 2 in Figur 4 nach rechts und links nicht mehr möglich. Auch ein Verkippen der Pritschenbox 2 wird so sicher verhindert. Die Befestigung der Pritschenbox 2 wird damit weiter verstärkt und stabilisiert. Gleiches gilt natürlich für jegliche andere Form eines Aufbauelementes, das über die genannten Eigenschaften und Merkmale verfügt.

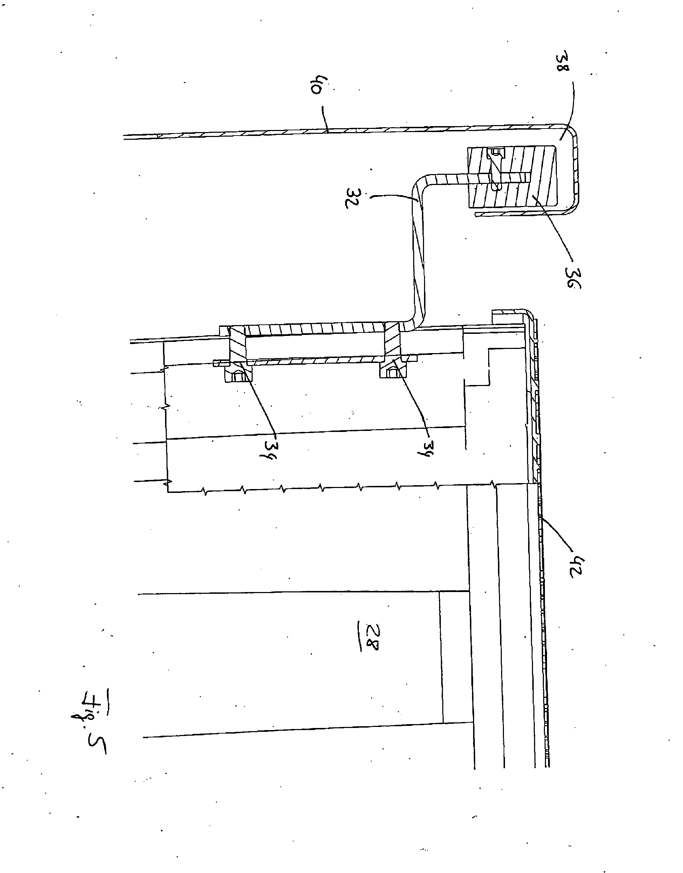

Figur 5 zeigt einen vergrößerten Ausschnitt aus Figur 4. Man erkennt das Hakenelement 32, das über zwei Schrauben 34 an dem Boxkörper 28 befestigt ist. Der Boxkörper 28 selbst ist durch einen Deckel 42 abgedeckt. Ist dieser abgeschlossen, kann auch das Hakenelement 32 nicht zerstörungsfrei von Unbefugten vom Boxkörper 28 entfernt werden, da dazu die Schrauben 34 gelöst werden müssten, wozu der Deckel 42 geöffnet werden muss.

Um das Hakenelement 32 und damit auch den Füllkörper 36 in die Nut 38 einbringen zu können, ist es vorteilhaft, wenn beispielsweise die untere der beiden gezeigten Schrauben 34 in einem Langloch geführt wird, das sich in Figur 5 von oben nach unten erstreckt. Auf diese Weise kann das Einführen folgendermaßen geschehen. Zunächst wird die obere der beiden Schrauben 34 gelöst und die untere der Schrauben 34 etwas gelockert. Auf diese Weise kann das Hakenelement 32 nach oben und unten verschoben werden. Nachdem das Hakenelement 34 am Boxkörper 28 entlang nach unten verschoben wurde, bis der Füllkörper 36 sich unterhalb der Nut 38 befindet, wird der Boxkörper 28 bzw. die gesamte Pritschenbox 2 an die Seitenwand 40 heran geschoben. Nun befindet sich der Füllkörper 36 direkt unterhalb der Nut 38. Das Hakenelement 32 wird nun wieder nach oben geschoben, so dass sich die untere der beiden Schrauben 34 in dem Langloch verschiebt. Hat der Füllkörper 36 und damit das obere Ende des Hakenelementes 32 die endgültige Position, wie sie beispielsweise in Figur 5 gezeigt ist, erreicht, werden die beiden Schrauben 34 wieder festgezogen. Alternativ dazu kann auch die Pritschenbox 2 so verkippt werden, dass der Füllkörper 36 bzw. das obere Ende des Hakenelementes 32 in die Nut 38 eingebracht werden kann.

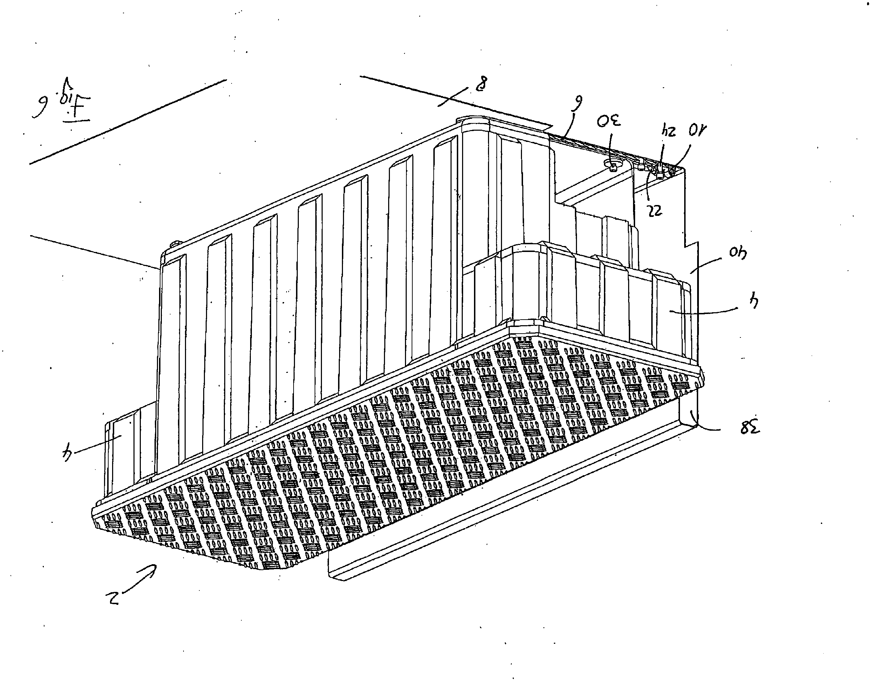

Figur 6 zeigt eine schematische 3D-Ansicht einer Pritschenbox 2 in einer Teilschnittdarstellung. Die Pritschenbox 2 hat auf der rechten und auf der linken Seite jeweils einen Überhang 4, um gegebenenfalls vorhandenen Radkästen des Fahrzeugs, auf dem die Box 2 angeordnet werden soll, Rechnung zu tragen. Die bisher gemachten Ausführungen gelten natürlich genau so für alle anderen Arten von Stauboxen oder auf einer Ladefläche anzuordnenden Gerätschaften, wie Kränen, Seilwinden oder ähnlichem, die über die beschriebenen Befestigungselemente verfügen. Alle diese Aufbauelemente können in einer besonders vorteilhaften, einfachen, sicheren und schnellen Art und Weise an der Ladefläche bzw. einer sich daran befindlichen Zurröse befestigt werden.

### Bezugszeichenliste

- 2: Pritschenbox
- 4: Überhang
- 6: Grundplatte
- 8: Ladefläche
- 10: Zurröse
- 12: D-Ring
- 14: Befestigungselement
- 16: Unterer Vorsprung
- 18: Oberer Vorsprung
- 20: Erstes Bauteil
- 22: Zweites Bauteil
- 24: Schraube
- 26: Unterseite
- 28: Boxkörper
- 30: Schraube
- 32: Hakenelement
- 34: Schraube
- 36: Füllkörper
- 38: Nut
- 40: Seitenwand
- 42: Deckel

## Patentansprüche

1. Aufbauelement für eine Ladefläche (8) eines Fahrzeuges, wobei das Aufbauelement über wenigstens ein Befestigungselement (14) verfügt, das einen unteren Vorsprung (16) und einen oberen Vorsprung (18) aufweist, und ein Verschlusselement umfasst, durch das der untere Vorsprung (16) und der obere Vorsprung (18) miteinander verbindbar sind, um eine geschlossene Öse zu bilden.

2. Aufbauelement nach Anspruch 1, **dadurch gekennzeichnet, dass** das Befestigungselement so angeordnet ist, dass eine an dem Fahrzeug angeordnete Zurröse (10) zwischen den unteren Vorsprung (16) und den oberen Vorsprung (18) einführbar ist, so dass das Aufbauelement durch Verbinden des unteren Vorsprungs (16) mit dem oberen Vorsprung (18) durch das Verschlusselement an der Zurröse (10) befestigbar ist.

3. Aufbauelement nach Anspruch 1 oder 2, **dadurch gekennzeichnet, dass** das Aufbauelement mehrere Befestigungselemente (14) aufweist.

4. Aufbauelement nach Anspruch 1, 2 oder 3, **dadurch gekennzeichnet, dass** das Verschlusselement eine Schraube (24) umfasst, durch die der untere Vorsprung (16) mit dem oberen Vorsprung (18) verbindbar ist.

5. Aufbauelement nach einem der vorstehenden Ansprüche, **dadurch gekennzeichnet, dass** das Befestigungselement (14) ein erstes Bauteil (20) und ein zweites Bauteil (22) umfasst, wobei der untere Vorsprung (16) an dem ersten Bauteil (20) und der obere Vorsprung (18) an dem zweiten Bauteil (22) angeordnet ist.

6. Aufbauelement nach Anspruch 5, **dadurch gekennzeichnet, dass** das erste Bauteil (20) und das zweite Bauteil (22) aus einem Metall bestehen.

7. Aufbauelement nach einem der vorstehenden Ansprüche, **dadurch gekennzeichnet, dass** zumindest ein Teil des Befestigungselementes (14) einstückig mit einer Grundplatte (6) des Aufbauelementes ausgebildet ist.

8. Aufbauelement nach einem der vorstehenden Ansprüche, **gekennzeichnet durch** wenigstens ein Hakenelement (32), das ausgebildet ist, in eine an dem Fahrzeug vorhandene Nut (38) eingebracht zu werden.

9. Aufbauelement nach Anspruch 8, **dadurch gekennzeichnet, dass** das wenigstens eine Hakenelement (32) in wenigstens einer Richtung verschieblich ist, so dass es in die Nut (38) einschiebbar ist.

10. Aufbauelement nach einem der vorstehenden Ansprüche, **dadurch gekennzeichnet, dass** es sich bei dem Aufbauelement um eine Staubox oder eine Pritschenbox (2) handelt.
